Europäisches Patentamt

European Patent Office

Office européen des brevets

Veröffentlichungsnummer: **0 296 314**
**A2**

# EUROPÄISCHE PATENTANMELDUNG

(21) Anmeldenummer: 88104331.9

(51) Int. Cl.⁴ **B01D 50/00**

(22) Anmeldetag: 17.03.88

(30) Priorität: 30.03.87 DE 3712113

(43) Veröffentlichungstag der Anmeldung:
28.12.88 Patentblatt 88/52

(84) Benannte Vertragsstaaten: .
**BE FR GB**

(71) Anmelder: **Schmid, Rudolf Martin**
**Rupert-Mayer-Strasse 39**
**D-7303 Neuhausen a.d.F.(DE)**

(72) Erfinder: **Schmid, Rudolf Martin**
**Rupert-Mayer-Strasse 39**
**D-7303 Neuhausen a.d.F.(DE)**

(54) **Selbstreinigendes Filter für gasförmige Medien Kompaktsystem mit Staubeintrittsüberhöhung.**

(57) Mit einem kombinierten Zu- und Abluftgebläse, das von einer Zentripetalturbine, auf gleicher Welle sitzend, angetrieben und von einer vorderen Entnahmestufe des Axialkompresors der Gasturbine beaufschlagt wird, ergeben sich Vorteile bezüglich automatischer Regelung von Drehzahl, ma- Luftmenge, automatischem Hochlauf und Start mit der Gasturbine.

Die im Hauptpatent beschriebene Staubeintrittsüberhöhung wird in einem Kompakt-Lufteintrittsfiltersystem, das die Lufteintrittsöffnung am höchsten Punkt vorsieht und die senkrecht in Fallrichtung der Staubpartikel nach unten führende Luftführung verwirklicht. Dieses Verfahren ist bezüglich der Staubeintrittsbelastung, der Staubabscheidung und der Verhinderung des Wiedereintritts des Staubes das Optimum unter diesen Kriterien. Durch die leicht durchführbare Hintereinander-Anordnung der Baugruppe - siehe Fig. 11 - gezeichnet ist eine zweifache - wird das Bauvolumen des Filtersystems noch einmal reduziert ohne daß die erfindungsgemäßen Vorteile bei der Abscheidung beeinträchtigt werden.

FIG. 11

### 1. Stand der Technik

Unter Bezug auf die Ursprungsbeschreibung vom 25.09.86 reiche ich inzwischen bekanntgewordene, neuere Ausführungsvorschläge der Firmen - Kurzbezeichnung A - LUWA AG in Zürich - und - Kurzbezeichnung B - American Air Filter in Louisville. U.S.A. ein. Bezug: Eur.Patent Appl. 82306573.5 v. 09.12.82,anbei.

Zu A: Prospekt 102.86 e. Daraus ergibt sich die liegende Anordnung mit rotierender Walze mit allen Nachteilen, die unter den Punkten 1.1 teilweise - hier Rezirkulation -, 1.2, 1.6 beschrieben sind. Aus dem beigefügten Blatt ist unter Arrangement of the Modules ganz offensichtlich die nachteilige Anordnung des liegenden moduls, und noch dazu übereinanderliegend, zu erkennen. Der abfallende Staub fällt jeweils nach unten und beaufschlagt das darunterliegende modul erneut. Die für Wüstengegenden untaugliche Drehmechanik und untaugliche stirnseitige Abdichtung der Walze sind weitere nachteilige Merkmale dieser Ausführung.

Zu B: Prospekt CAD-1-334A - Jul - 85. Perspektiv-Zeichnung eines Moduls und eine Ansichtszeichnung dieses Moduls mit principle of cleaning cycle. Aus letzterem ergibt sich, daß die unter den Punkten 1. 1.1, 1.3, 1.4, 1.5 und 1.6 beschriebenen Nachteile bestehen.

Die Erfahrung zeigt geradezu, daß die im spitzen Winkel stehenden filter cartridges eben nicht ausgepulst und dementsprechend nicht vollständig abgereinigt werden und der abfallende Staub ebenfalls nicht vollständig, und zwar wegen der Entfernung zu den Absaugekanälen, entfernt werden kann.

Aus den engineering datas auf Seite 7 sind die Abmessungen und die Tatsache der Mehrfach-Übereinander-Anordnung zu erkennen mit den vorher beschriebenen Nachteilen. Auf Seite 6 beschreibt der Hersteller in curve C selbst den durch das teilweise Zusetzen des filter panels verursachten bleibenden Druckanstieg - zitiert:

"After each cleaning cycle, the ∆P will rise to a progressively higher 'cleaned' point until the operating band pressure is reached."

### 2. Vorschläge zur Verbesserung

2.1 Kombiniertes Zu- und Abluftgebläse auf einer Welle mit Antrieb durch Zentripetal-Turbine, die von der Hauptkompressorluft aus der 2. oder 3.

Axialstufe beaufschlagt wird. In Fig. 10. die einen Schnitt durch das auf einer Welle sitzende Turbinen- und Gebläseaggregat darstellt, ist die Anordnung dieser Zentraleinheit am unteren Ende des Bodens des Filtergehäuses des Lufteintrittsfilters (1) zu erkennen. Dieses Aggregat (37) ist über eine Befestigungsplatte (38) mit dem unteren Abschlußring (32) verschraubt. Wie in Fig. 10 gezeigt. kommt die verdichtete Luft von der Gasturbine über eine Rohrleitung mit Abschlußschieber in das Spiralgehäuse der Zentripetalturbine (39), welche das Axialgebläse (28) antreibt. Die von der GT kommende - gereinigte - Luft verläßt über den axialen Austritt (40) die Zentripetalturbine (39) und strömt in den Sammelraum und von dort über gesteuerte Klappen zu den Reinigungskanälen (11).

Die von den Absaugkanälen (10) einströmende staubhaltige Luft wird mit dem Axialgebläse (28) nach unten befördert und kann über Auffangwannen abtransportiert werden.

Die Vorteile werden wie folgt beschrieben:
- Der oder die antreibenden Elektromotoren fallen weg.
- Die Ein- und Ausschaltsteuerung dieser Motoren ist nicht mehr erforderlich. Das Turbinen- und Gebläseaggregat läuft automatisch mit dem Start der Gasturbine und zwar gleichförmig mit deren Beschleunigung hoch.
- Die Drehzahlbegrenzung erfolgt automatisch, und zwar mit der Wahl der Entnahmestufe beim Axialkompressor der Gasturbine, mit der Gleichgewichtsbedingung für den Turbinen-und den angetriebenen Gebläseteil und mit der Düsenöffnunggleichwertige Düse für die Ausblasequerschnitte an den Düsen (18,19) - d.h. mit der abströmenden maximalen Luftmenge.

2.2 Kompakt-Lufteintrittsfiltersystem mit Lufteintrittsöffnung am höchsten Punkt, mit zusammenfallender Luftführung zur Staubpartikel-Fallrichtung nach unten.

Mit Fig. 11 ist eine Ausführung und ein Verfahren gezeigt, das in sich alle beschriebenen Vorteile des Patentgesuches P 36 35 085.0 vereinigt.

Die gezeigte Anordnung hat die Merkmale der
- Staubeintrittsüberhöhung
- der senkrecht nach unten führenden Luftrichtung der staubhaltigen Außenluft
- den Umlenkeffekt dieser Luft mit der Wirkung einer Vorabscheidung der größeren und - schwereren Staubpartikel
- die senkrecht nach unten führende Luftrichtung der gereinigten Luft in platzsparender Anordnung. Diese Anordnung kann mehrmals, gezeigt ist eine zweifache Anordnung hintereinander, ohne Strömungs- oder Abscheidenachteile wiederholt werden.

- Es können sämtliche erfindungsgemäßen Vorschläge und Alternativen, insbesondere das kombinierte Turbinen- und Gebläseaggregat (37), z.B. anstelle des Gebläses (35) -Fig. 11 - und oder anstelle des zentralen Gebläses (27), und zwar jeweils an gleicher Stelle sitzend mit den beschriebenen Zu- und Ableitungen angewandt werden.

Im einzelnen wird die erfindungsgemäße Anordnung wie folgt beschrieben:

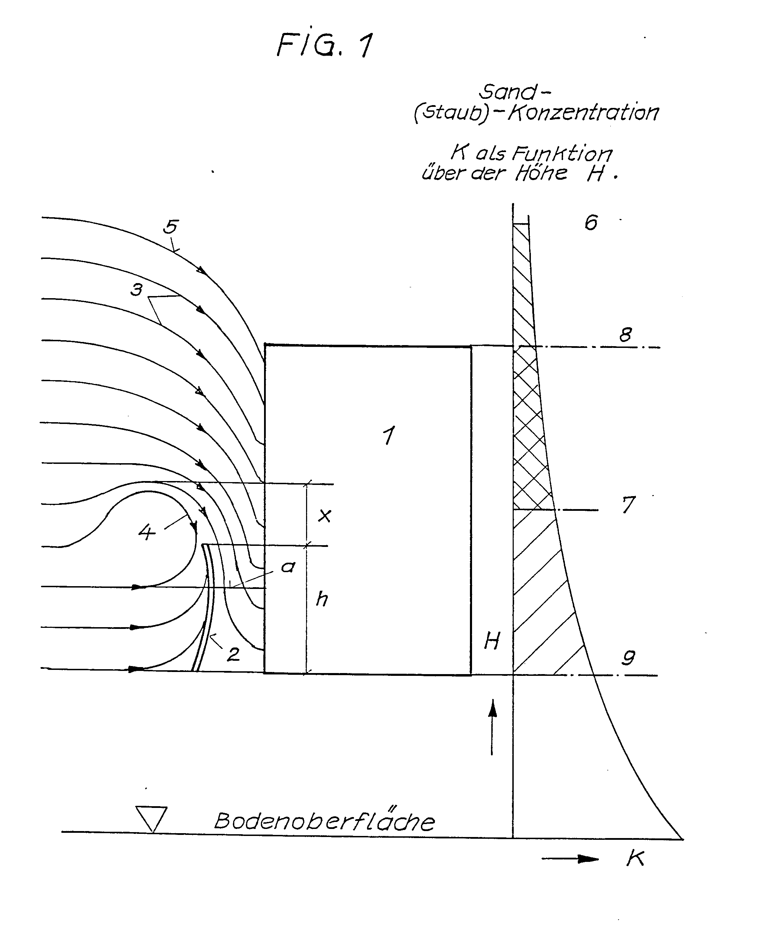

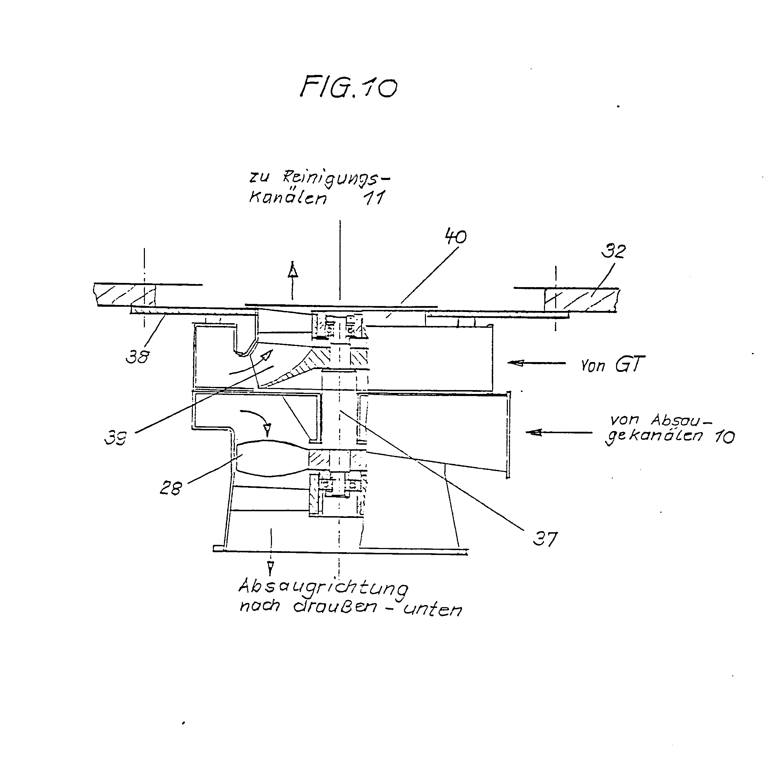

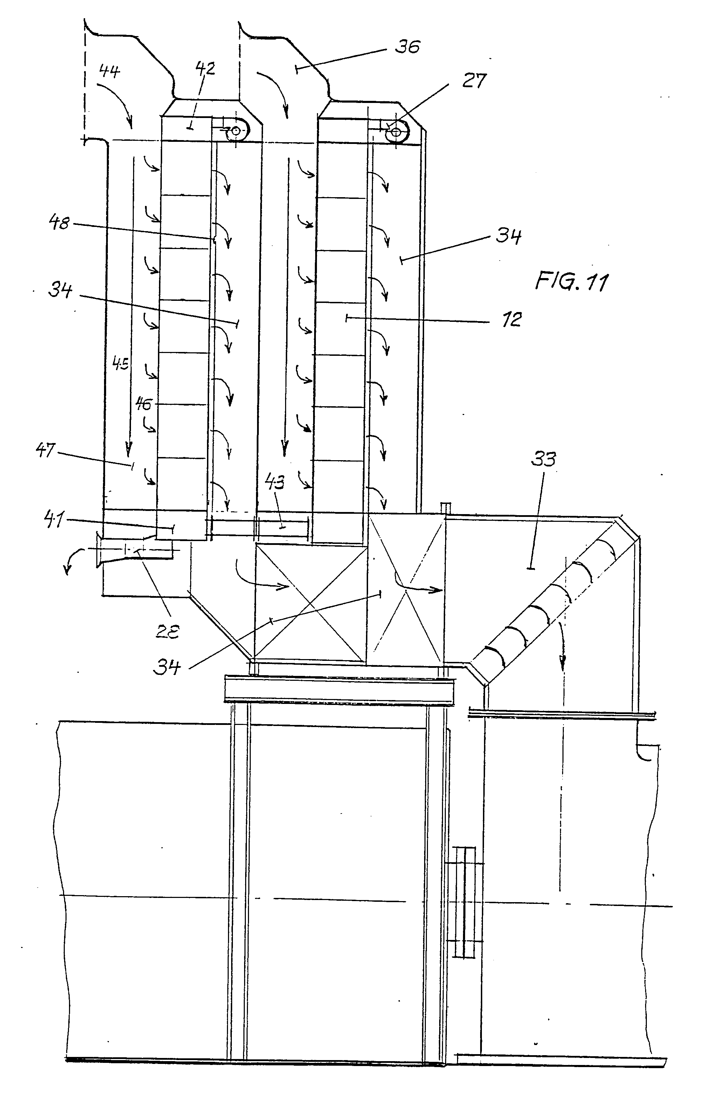

Die Umgebungsluft strömt am höchsten Punkt des Lufteintrittsfilters (1) in die Lufteintrittsöffnung (36) ein. Dadurch ist die Staubbelastung des Filtersystems von Anfang an sehr gering, siehe dazu Fig. 1 und darin den Punkt 6. Die Belastung entspricht etwa dem Rechteck, das aus der Höhe des Lufteintrittsquerschnittes und dem Wert k am Punk 6 gebildet wird. Dieser Verrringerung ist die Filterfläche proportional. Wie die Pfeile (44,45,46) andeuten, strömt die Luft in den Luftverteilkanal (47), weiter in die Filterpanels (12) und von dort in den Sammelkanal (48). In diesem sind vorteilhaft Schalldämpferkulissen (34) über die ganze Höhe angeordnet, wobei der in der Hauptströmungsrichtung vorne liegende Schalldämpfer (34) bei zweifacher Anordnung deshalb wegfallen kann, weil durch den dahinter liegenden und den im Austritt angeordneten Schalldämpfer (34) - siehe die beiden Schalldämpferelemente im Ansaugkanal (33) - die Dämmung bezüglich Luft- und Körperschall so groß ist, daß sich dieser Schalldämpferteil erübrigt. Die oben angeordneten zwei Gebläse (27) saugen die Reinluft aus dem Sammelkanal (48) an und drücken diese über den Sammelkasten (42) in den Kanal (11). Das in der Hauptströmungsrichtung hinten liegende Gegläse (27) kann, wie unter 2.1 beschrieben, durch das Aggregat (37) ersetzt werden und erhält dann die Reinluft vom Axialkompressor der Gasturbine. In diesem Fall ist es unten, und zwar auf dem Ansaugkanal (33) angeordnet.

Das Absaugegebläse (35) befördert die in den Sammelkanal (41) eingeströmte staubhaltige Luft nach außen. Wie oben ausgeführt, kann dieses durch das Aggregat (37) ersetzt werden. Dabei wird die Reinluft, von der Zentripetal-Turbine (39) kommend, in den Luftsammelkasten (41) gedrückt und den Kanälen (11) zugeführt. Die staubhaltige Luft, von den Dreieckskanälen (10) kommend, wird über einen zweiten Absaugekanal, der vor dem Sammelkanal (41) - nicht gezeichnet - angeordnet ist, von dem Axialgebläse (28) abgesaugt und wie gezeichnet, ins Freie befördert.

## Ansprüche

PATENTANSPRÜCHE für das kombinierte Zu- und Abluftgebläse (37) mit Antrieb durch Zentripetal-Turbine (39) - Fig. 10 -

1. Zu- und Abluftgebläse (37) zur Förderung der Reinluftmenge zu den Schlitzdüsen (18.19) und zur Absaugung der staubhaltigen Luft über die Schlitze (15,16,17), dadurch gekennzeichnet, daß der Antrieb durch eine Zentripetal-Turbine (39) erfolgt, die von der Kompressorluft der Gasturbine beaufschlagt wird und Leistungsgleichgewicht zwischen der Zentripetal-Turbine (39) und dem Abluftgebläse (37) zuzüglich der Energie aus der Reinluftmenge, welche nach der Zentripetalturbine (39) die Schlitze (15,16,17) beaufschlagt, besteht.

2. Verfahren nach Anspruch 1, dadurch gekennzeichnet, daß das Zu- und Abluftgebläse (37) und die Zentripetalturbine (39) auf einer Welle angeordnet ist und die durch das Gebläse (28) geförderte Abluftmenge von den Schlitzen (15,16,17) die Reinluftmenge zu den Schlitzdüsen (18,19) um 10 % bis 40 % überschreitet.

3. Verfahren nach Anspruch 1 und 2, dadurch gekennzeichnet, daß das - Aggregat -, Zu- und Abluftgebläse (37) automatisch mit dem Start der Gasturbine hochläuft und durch die Wahl der Entnahmestufe beim Axialkompressor der Gasturbine sowohl die Drehzahlbegrenzung, die Zuluft- als auch die Absaugemengenregelung bewerkstelligt wird.

4. Verfahren nach Anspruch 1, 2 und 3, dadurch gekennzeichnet, daß die Entnahmemenge von der Gasturbine durch einen Schieber in der Zuleitung eingestellt und unterbrochen werden kann und über gesteuerte Klappen zu den Reinigungskanälen (11) die Beaufschlagung der einzelnen Sektoren des Filtersystems (1) erfolgt.

PATENTANSPRÜCHE für das Kompakt-Lufteintrittsfiltersystem (1) mit Lufteintrittsöffnung (36) am höchsten Punkt und Luftführung in Staubpartikel-Fallrichtung - Fig. 11 -

5. Kompakt-Luftfiltersystem (1), dadurch gekennzeichnet, daß sich die Lufteintrittsöffnung (36) am höchsten Punkt befindet, die Strömungsrichtung der Luft im Luftverteilkanal (47) entsprechend den Pfeilen (44,45,46) nach unten weist, in die Filterpanels (12) einströmt und so mit der Fallrichtung der abgeschiedenen Staubpartikel übereinstimmt und mit diesem erfindungsgemäßen Verfahren die Rezirkulation und das re-entrainment - der Wiedereintritt - der Staubpartikel in das Filtersystem ausgeschlossen ist.

6. Verfahren nach Anspruch 5 , dadurch gekennzeichnet, daß die tatsächliche Vorbelastung der Umgebungsluft, die am höchsten Punkt des Filtersystems einzuströmen gezwungen ist, gegenüber einer Einströmung von herkömmlichen Filtersystemen in quasiliegender Anordnung mindestens um einen Faktor drei niedriger ist und dementsprechend die Standzeit der Filterelemente um den gleichen Faktor bei einem wesentlich niedrigeren Bauaufwand für das gesamte Filtersystem (1) - etwa 2 3 des bisher bekannten Systems Systeme - verlängert wird.

7. Verfahren nach Anspruch 5 und 6, dadurch gekennzeichnet, daß eine Mehrfachanordnung der Baugruppe, bestehend aus Lufteintrittsöffnung (36), Luftverteilkanal (47), Filterpanels (12) und Sammelkanal (48), in Strömungsrichtung hintereinander erfolgen kann und keine irgendwie geartete Beeinträchtigung bezüglich Vorbelastung der Umgebungsluft (Ansaugbelastung) und Abscheideverhalten des Filtersystems (1) im Gesamten erfolgt und dadurch eine weitere erhebliche Verminderung des Bauaufwandes erzielt werden kann.

8. Ausführung nach den Verfahren 5, 6 und 7, dadurch gekennzeichnet, daß in den Sammelkanälen (48) und im Ansaugkanal (33) Schalldämpferkulissen angeordnet sind und die Reinluft in diese Kulissen (34) unter einem Winkel von 90° umgelenkt wird. .

9. Ausführung nach den Verfahren 5, 6 und 7, dadurch gekennzeichnet, daß das kombinierte Zu- und Abluftgebläse (37) mit Antrieb durch Zentripetal-Turbine (39) nach den Patentansprüchen 1,2,3 und 4 anstelle des Absaugegebläses (35) eingebaut wird und die Reinigungsluft über den Sammelkasten (41) in die Kanäle (11) gedrückt wird und andererseits die staubhaltige Abluft über einen davor liegenden Absaugekanal vom Axialgebläse (28) ins Freie befördert wird und weiterhin eine zweite identische Anordnung dieses Zu- und Abluftgebläses (37) bei Zweifachanordnung der unter 7. erwähnten Baugruppe über dem Ansaugkanal (33) vorgesehen wird mit gleicher Ausbildung der Sammelkästen für die Zu- und Abluft.

# FIG. 1

Sand –
(Staub) – Konzentration

K als Funktion
über der Höhe H.

Bodenoberfläche

# FIG.10

zu Reinigungs-
Kanälen   11

40

32

38

39

28

37

Von GT

von Absaugekanälen 10

Absaugrichtung
nach draußen - unten

FIG. 11